# EUROPEAN PATENT APPLICATION

(11) **EP 4 810 995 A1**
(43) Date of publication of application: **23.09.2026**
(21) Application number: 24893060.4
(22) Date of filing: 30.09.2024
(51) Int. Cl.: G01S 13/36, G01S 7/35

(54) **METHOD AND DEVICE FOR EXPANDING FREQUENCY-MODULATED CONTINUOUS WAVE RANGING RANGE**

(30) Priority: 22.11.2023 CN 202311564905
(71) Applicant: Chotest Technology Inc., Shenzhen, Guangdong 518071 (CN)
(72) Inventor: LIANG, Zhiming, Shenzhen, Guangdong 518071 (CN); FENG, Furong, Shenzhen, Guangdong 518071 (CN); ZHANG, Hejun, Shenzhen, Guangdong 518071 (CN); LIN, Hailiang, Shenzhen, Guangdong 518071 (CN); WU, Xingfa, Shenzhen, Guangdong 518071 (CN); LIAO, Xuewen, Shenzhen, Guangdong 518071 (CN); CHEN, Yuan, Shenzhen, Guangdong 518071 (CN); LIU, Yi, Shenzhen, Guangdong 518071 (CN); ZHANG, Haiye, Shenzhen, Guangdong 518071 (CN)
(74) Representative: Isern Patentes y Marcas S.L.
(86) International application number: PCT/CN2024/122985
(87) International publication number: WO 2025/107901

(57) **Abstract**

The present invention describes a method and a device for extending a ranging scope of frequency-modulated continuous waves. A ranging device includes a delay network used to divide the ranging scope into a plurality of distance intervals, and the delay network includes a plurality of preset delay parameters matching the plurality of distance intervals. The method for extending the ranging scope includes: outputting measurement light to a target and acquiring return light formed by scattering of the measurement light by the target; inputting reference light into the delay network such that the delay network outputs at least one path of delayed reference light, the delayed reference light having preset delay parameters matching the reference light; obtaining at least one path of interference signals based on the at least one path of delayed reference light and the return light, the at least one path of interference signals matching the distance interval where the target is positioned; and obtaining a distance of the target based on the distance interval and the at least one path of interference signals. Thus, an intermediate frequency of the interference signals can be reduced while extending the ranging scope, and the ranging resolution can be improved.

## Description

### BACKGROUND OF INVENTION

The present invention relates to the technical field of laser measurement, and in particular to a method and a device for extending a ranging scope of frequency-modulated continuous waves.

### Description of Related Art

In laser ranging, a ranging manner based on linear frequency-modulated continuous waves (LFMCWs) is a commonly used technique. Specifically, a ranging device based on LFMCWs emits emitted light with linearly varying frequencies (that is, linear frequency-modulated continuous light) to an object to be measured (also referred to as a target) during a frequency modulation period. The target scatters the emitted light to form return light, and the return light interferes with the emitted light to generate an interference signal carrying distance information of the target. The corresponding interference signal is a sinusoidal time-varying signal varying at a fixed frequency (referred to as an intermediate frequency for short). A measurement distance between the target and the ranging device may be obtained by measuring the intermediate frequency of the interference signal, and the intermediate frequency is proportional to the measurement distance.

In the prior art, when the measurement distance is relatively large, the intermediate frequency of the interference signal is also relatively high, and the ranging device requires a processing circuit designed with a relatively high sampling rate. To meet the relatively high sampling rate, the complexity of circuit design is often increased, for example, better electromagnetic compatibility design, larger storage capacity, a higher data transmission bandwidth, and stricter timing analysis are required, thereby reducing the reliability of the processing circuit.

In addition, as known from the prior art, the measurement distance is also limited by the frequency modulation period. To achieve a relatively large measurement distance, in another prior art, by reducing a frequency modulation bandwidth of emitted light and expanding the frequency modulation period, a ranging scope of a ranging system is extended. Although the intermediate frequency of the interference signal is reduced in this prior art, there is a defect of relatively low ranging resolution in this prior art.

### SUMMARY OF INVENTION

The present invention is accomplished in view of the above conditions of the prior art, and aims to provide a method and a device for extending a ranging scope of frequency-modulated continuous waves, which can reduce an intermediate frequency of an interference signal while extending the ranging scope, so as to simplify the design of a processing circuit, improve the reliability of the circuit, simultaneously reduce the limitations of a frequency modulation bandwidth and a frequency modulation period on a measurement distance scope, and improve the ranging resolution.

For the above purpose, a first aspect of the present invention provides a method for extending a ranging scope of frequency-modulated continuous waves, being a method for measuring a distance of a target by utilizing a ranging device. The ranging device includes a delay network used to divide a ranging scope of the ranging device into a plurality of distance intervals, the delay network includes a plurality of preset delay parameters matching the plurality of distance intervals, and the method for extending the ranging scope of frequency-modulated continuous waves includes: outputting measurement light to the target and acquiring return light formed by scattering of the measurement light by the target; inputting reference light into the delay network such that the delay network outputs at least one path of delayed reference light, the delayed reference light having preset delay parameters matching the reference light; obtaining at least one path of interference signals based on the at least one path of delayed reference light and the return light, the at least one path of interference signals matching the distance interval where the target is positioned; and obtaining the distance of the target based on the distance interval and the at least one path of interference signals.

In the method for extending the ranging scope of frequency-modulated continuous waves provided by the first aspect of the present invention, the measurement light is output to the target and the return light is acquired, the reference light is input into the delay network to obtain the at least one path of delayed reference light, and compared with the reference light before being input into the delay network, the delayed reference light has preset and known preset delay parameters matching the reference light. In other words, a function of the delay network is equivalent to maintaining a position of the target to be unchanged, and indirectly moving the ranging device toward a direction close to the target by a known distance, thereby reducing a frequency difference between the reference light and the return light, that is, compared with the interference signal formed by interference between the reference light and the return light, the intermediate frequency of the interference signal formed by interference between the delayed reference light and the return light is correspondingly reduced. In addition, in the method for extending the ranging scope provided by the first aspect of the present invention, the ranging scope can be divided into a plurality of distance intervals by judging whether the return light interferes with the at least one path of delayed reference light to generate the interference signal. Thus, when measuring the distance of the target, the distance interval where the distance of the target is positioned can be known, thereby facilitating selection of the matched interference signal to calculate the distance of the target. Thus, through the method for extending the ranging scope provided by the first aspect of the present invention, a sampling rate of the processing circuit of the ranging device and the complexity of related circuit design can be reduced, thereby facilitating to break through the limitations of the intermediate frequency of the interference signal, the frequency modulation bandwidth and the frequency modulation period on the ranging scope, and further extending the ranging scope of the ranging device. Moreover, since the ranging scope is divided into a plurality of small distance intervals, the ranging resolution can be advantageously improved by increasing the frequency modulation bandwidth in each distance interval.

In addition, according to the method for extending the ranging scope of frequency-modulated continuous waves involved in the first aspect of the present invention, optionally, the delay network includes a plurality of delay paths, and each of the plurality of delay paths has the preset delay parameter in one-to-one correspondence with each of the plurality of distance intervals. In this case, the delayed reference light with an appropriate preset delay parameter can be selected to interfere with the return light according to different distances of the target. For example, when the distance of the target is relatively small, the delayed reference light with a relatively small preset delay parameter can be selected to interfere with the return light; and when the distance of the target is relatively large, the delayed reference light with a relatively large preset delay parameter can be selected to interfere with the return light, thereby facilitating to break through the limitations of the intermediate frequency of the interference signal, the frequency modulation bandwidth and the frequency modulation period on the ranging scope, and thus extending the ranging scope of the ranging device. Moreover, since the ranging scope is divided into a plurality of small distance intervals, the ranging resolution can be advantageously improved by increasing the frequency modulation bandwidth in each distance interval.

In addition, according to the method for extending the ranging scope of frequency-modulated continuous waves involved in the first aspect of the present invention, optionally, the method includes: obtaining a combined code for representing whether the delayed reference light output by the delay network interferes with the return light based on the at least one path of interference signals, and obtaining the distance interval where the target is positioned based on the combined code. In this case, when measuring the distance of the target, the ranging device can determine the distance interval where the distance of the target is positioned by acquiring the combined code, and the form of the combined code facilitates implementation of the method for extending the ranging scope through digital processing.

In addition, according to the method for extending the ranging scope of frequency-modulated continuous waves involved in the first aspect of the present invention, optionally, the delay network includes a plurality of delay paths, and the method for extending the ranging scope of frequency-modulated continuous waves includes: dividing the plurality of delay paths into at least two types of range paths based on the plurality of distance intervals, the range paths matching at least one of the distance intervals; obtaining the range path matching the distance interval where the target is positioned based on the at least one path of interference signals; obtaining a combined code matching the range path based on the at least one path of interference signals and the range path; and obtaining the distance interval where the target is positioned based on the combined code matching the range path. In this case, when measuring the distance of the target, a range where the distance of the target is positioned and a corresponding range path can be preliminarily determined based on the interference signal, and the delay path to be used can be determined based on the range where the distance of the target is positioned, thereby reducing the workload of interference signal detection and the number of bits of the combined code, and thus improving the ranging efficiency.

In addition, according to the method for extending the ranging scope of frequency-modulated continuous waves involved in the first aspect of the present invention, optionally, the method includes: obtaining the preset delay parameter matching a preset condition based on the distance interval as a target delay parameter, the preset condition being that the interference signal is not less than a preset threshold; and obtaining the distance of the target based on the target delay parameter, the at least one path of interference signals, and system parameters of the measurement light. In this case, when the distance interval where the distance of the target is positioned is determined, the interference signal meeting the preset condition can be selected to calculate the distance of the target, thereby improving the ranging accuracy.

In addition, according to the method for extending the ranging scope of frequency-modulated continuous waves involved in the first aspect of the present invention, optionally, the preset delay parameters are configured such that at least one of relation curves corresponding to the distance intervals has a monotonic interval, and combinations of types of the interference signals involved in different distance intervals are different, thereby facilitating division of the distance intervals and simplifying a calculation process of a measurement distance.

A second aspect of the present invention provides a device for extending a ranging scope of frequency-modulated continuous waves, being a device used to measure a distance of a target, including: a generating module, a delay network used to divide a ranging scope of the device into a plurality of distance intervals, a coupling module, and a processing module, wherein the delay network includes a plurality of preset delay parameters matching the plurality of distance intervals; light waves emitted by the generating module include measurement light and reference light, the measurement light is output to the target, and the device acquires return light formed by scattering of the measurement light by the target; the reference light is input into the delay network, and the delay network outputs at least one path of delayed reference light, the delayed reference light having preset delay parameters matching the reference light; the at least one path of delayed reference light and the return light are respectively transmitted to the coupling module, the coupling module outputs at least one path of interference signals to the processing module, and the at least one path of interference signals matches the distance interval where the target is positioned; and the processing module obtains the distance of the target based on the distance interval and the at least one path of interference signals.

In the device provided by the second aspect of the present invention, by providing the delay network and dividing the ranging scope into a plurality of distance intervals based on the interference signal, a sampling rate of the processing circuit and the complexity of related circuit design can be reduced, thereby facilitating to break through the limitations of the intermediate frequency of the interference signal, the frequency modulation bandwidth and the frequency modulation period on the ranging scope, and further extending the ranging scope of the ranging device. Moreover, since the ranging scope is divided into a plurality of small distance intervals, the ranging resolution can be advantageously improved by increasing the frequency modulation bandwidth in each distance interval.

In addition, according to the device involved in the second aspect of the present invention, optionally, the delay network includes a plurality of delay paths, the device includes a range optical switch for dividing the plurality of delay paths into at least two types of range paths based on the plurality of distance intervals, the range optical switch includes an input end and a plurality of output ends corresponding to different range paths, the output ends of the range optical switch are connected to the matched delay paths, and the reference light is input into the delay network via the range optical switch. In this case, when measuring the distance of the target, the range optical switch can be controlled to obtain the delay path of the corresponding range, thereby reducing the workload of interference signal detection, and thus improving the ranging efficiency.

In addition, according to the device involved in the second aspect of the present invention, optionally, if the processing module does not receive the at least one path of interference signals, the range optical switch is controlled to switch the range paths. In this case, when measuring the distance of the target, if the processing module does not receive the interference signals, it is judged that the distance of the target is not within the range defined by the delay path connected to the output end of the current range optical switch, and the processing module can switch the range optical switch to another range path, thereby achieving switching between different range paths.

In addition, according to the device involved in the second aspect of the present invention, optionally, the delay network includes a plurality of delay paths, and the plurality of delay paths are arranged in parallel or in series. In this case, when the delay paths are arranged in parallel, the delay network has a simple structure, thereby facilitating independent design of each delay path, and by arranging the delay paths in parallel, when a certain delay path fails, other delay paths are not affected, and maintenance is also facilitated; and when the delay paths are arranged in series, the number of components of the ranging device can be reduced, thereby being conducive to achieving the portability and miniaturization of the ranging device.

According to the present invention, a method and a device for extending a ranging scope of frequency-modulated continuous waves can be provided, which can reduce an intermediate frequency of an interference signal while extending the ranging scope, so as to simplify the design of a processing circuit, improve the reliability of the circuit, simultaneously reduce the limitations of a frequency modulation bandwidth and a frequency modulation period on a measurement distance scope, and improve the ranging resolution.

### BRIEF DESCRIPTION OF THE DRAWINGS

The present invention will now be explained in further detail by way of example only with reference to the accompanying drawings.
FIG. 1 is a diagram showing an application scenario of a ranging device involved in an example of the present invention.
FIG. 2A is a schematic diagram showing sawtooth linear frequency-modulated continuous waves involved in an example of the present invention.
FIG. 2B is a schematic diagram showing triangular linear frequency-modulated continuous waves involved in an example of the present invention.
FIG. 2C is a schematic diagram showing ranging based on the triangular linear frequency-modulated continuous waves involved in an example of the present invention.
FIG. 3 is a flowchart showing a method for extending a ranging scope involved in an example of the present invention.
FIG. 4 is a schematic diagram showing a principle of the method for extending the ranging scope involved in an example of the present invention.
FIG. 5 is a schematic diagram showing a first embodiment of the ranging device involved in an example of the present invention.
FIG. 6 is a schematic diagram showing a relation curve between an intermediate frequency of an interference signal formed by delayed reference light and return light and a distance of a target involved in an example of the present invention.
FIG. 7 is a schematic diagram showing a second embodiment of the ranging device involved in an example of the present invention.
FIG. 8 is a schematic diagram showing a third embodiment of the ranging device involved in an example of the present invention.

### DETAILED DESCRIPTION

The technical solutions in the embodiments of the present invention will be clearly and completely described below with reference to the accompanying drawings in the embodiments of the present invention. Apparently, the described embodiments are only some of the embodiments of the present invention, but not all of them. Based on the embodiments in the present invention, all other embodiments filled by those ordinarily skilled in the art without creative efforts should fall within the scope of protection of the present invention.

It should be noted that the terms "first", "second", "third", "fourth" and the like in the description and claims of the present invention and the above drawings are used to distinguish different objects rather than to describe a specific order. In addition, the terms "including", "having" and any variations thereof are intended to cover non-exclusive inclusion. For example, a process, method, system, product or device containing a series of steps or units is not limited to the listed steps or units, but optionally further includes unlisted steps or units, or optionally further includes other steps or units inherent to this process, method, product or device. In the following description, the same reference numerals are assigned to the same parts, and repeated descriptions are omitted. In addition, the drawings are only schematic diagrams, and the dimensional ratios between parts or the shapes of parts may differ from actual ones.

A method for extending a ranging scope of frequency-modulated continuous waves provided by a first aspect of the present invention may be applicable to measuring a distance of a target by utilizing a ranging device. In the present invention, the method for extending the ranging scope of frequency-modulated continuous waves may also be referred to as a method for extending a ranging scope, a method for expanding a ranging scope, a method for expanding a measurement distance, and a method for extending a measurement distance.

A device for extending a ranging scope of frequency-modulated continuous waves provided by a second aspect of the present invention is a device used to measure a distance of a target (hereinafter referred to as a ranging device for short). In the present invention, the ranging device may also be referred to as a distance measuring device or a device for measuring a distance of a target.

In the present invention, the target may be referred to as an object to be measured, a target to be measured, a workpiece to be measured, or a part to be measured. The distance of the target may refer to a distance from a measuring point on a surface of the target to the ranging device, may also be referred to as a measurement distance of the target, and may also be referred to as a measurement distance for short.

In the present invention, the ranging scope may refer to a maximum measurement distance that the ranging device can measure. In the present invention, the ranging resolution of the ranging device may refer to a minimum difference which is distinguished and obtained between two different measurement distances.

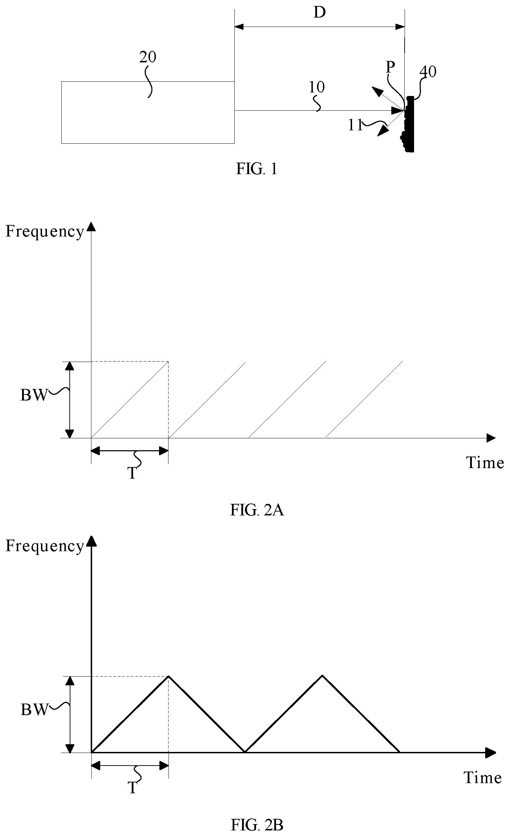

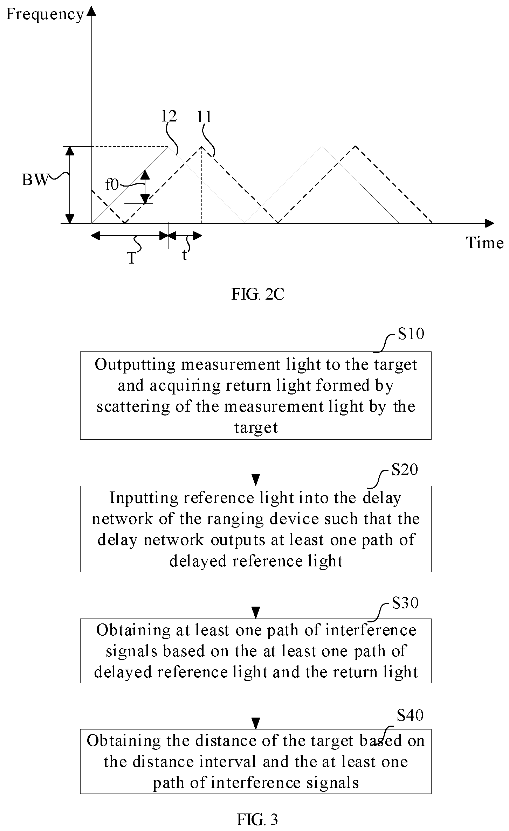

FIG. 1 is a diagram showing an application scenario of a ranging device 20 involved in an example of the present invention. FIG. 2A is a schematic diagram showing sawtooth linear frequency-modulated continuous waves involved in an example of the present invention. FIG. 2B is a schematic diagram showing triangular linear frequency-modulated continuous waves involved in an example of the present invention. FIG. 2C is a schematic diagram showing ranging based on the triangular linear frequency-modulated continuous waves involved in an example of the present invention.

Referring to FIG. 1, in some examples, the ranging device 20 may measure a distance D of a target 40 based on a frequency-modulated continuous wave (FMCW) ranging manner.

In some examples, ranging device 20 may measure distance D of target 40 based on a linear frequency-modulated continuous wave ranging manner. In this case, ranging device 20 emits a linear frequency-modulated continuous wave signal (which may also be referred to as measurement light 10) with a frequency varying linearly with time. Measurement light 10 is emitted to a measuring point P on a surface of target 40, and then ranging device 20 receives a signal scattered back from measuring point P (which may also be referred to as return light 11). Distance D of target 40 causes a frequency of return light 11 to change relative to measurement light 10, and distance D of target 40 can be calculated by measuring this frequency variation (referring to FIG. 1).

It should be noted that in the present invention, scattering may refer to a phenomenon that measurement light 10 is deflected on the surface of target 40. In some examples, the scattering may include reflection or diffuse reflection.

In some examples, the linear frequency-modulated continuous waves may be the sawtooth linear frequency-modulated continuous waves (referring to FIG. 2A). In some examples, the linear frequency-modulated continuous waves may be the triangular linear frequency-modulated continuous waves (referring to FIG. 2B).

In some examples, a relation between a frequency and time of the linear frequency-modulated continuous waves may be explained by a frequency function, that is, the frequency function may describe a variation of the frequency of the linear frequency-modulated continuous waves with time (referring to FIG. 2A and FIG. 2B).

In some examples, the frequency function of the linear frequency-modulated continuous waves may include a frequency modulation bandwidth BW and a frequency modulation period T (referring to FIG. 2A and FIG. 2B). Frequency modulation bandwidth BW may represent a linear variation scope of the frequency with time, and frequency modulation period T may represent time required for the frequency to vary from an initial value to a final value. Frequency modulation bandwidth BW is also referred to as a sweep bandwidth, and frequency modulation period T is also referred to as a sweep period.

In the present invention, the method for extending the ranging scope provided by the first aspect of the present invention and ranging device 20 provided by the second aspect will be introduced by taking a ranging manner based on triangular linear frequency-modulated continuous waves as an example.

In some examples, a light beam emitted by ranging device 20 may be laser light. In some examples, the light beam emitted by ranging device 20 may be used as measurement light 10 to be output to measuring point P on the surface of target 40 and scattered by measuring point P to form return light 11.

In some examples, the light beam emitted by ranging device 20 may also be used as reference light 12 (which may also be referred to as local oscillator light) to interfere with return light 11 to form an interference signal. In this case, an interference signal carrying information of measurement distance D can be formed. In FIG. 2C, a frequency difference f0 is an intermediate frequency of the interference signal reflecting measurement distance D, and distance D of target 40 can be calculated based on the intermediate frequency of the interference signal.

Referring to FIG. 2C, in some examples, return light 11 acquired by ranging device 20 may have a flight time t related to measurement distance D relative to reference light 12. In some examples, flight time t may be understood as time required for measurement light 10 to travel from ranging device 20 to the surface of target 40 to be scattered to form return light 11, and then for return light 11 to return to ranging device 20.

As known from the prior art, distance D of target 40 is proportional to the intermediate frequency of the interference signal (that is, the frequency difference f0 in FIG. 2C). When distance D of target 40 is larger, flight time t is larger, and the intermediate frequency of the interference signal is also larger, thereby imposing higher requirements on components (for example, an analog-to-digital converter 323, described later) and a signal processing speed of ranging device 20. Thus, the ranging scope of ranging device 20 is limited by the intermediate frequency of the interference signal.

In some prior arts, the limitation of the intermediate frequency of the interference signal on the ranging scope may be reduced in a manner of decreasing frequency modulation bandwidth BW of measurement light 10, in other words, the limitation of the intermediate frequency of the interference signal on the ranging scope may be reduced by decreasing a gradient of the frequency function of measurement light 10. However, as known from the prior art, the ranging resolution of ranging device 20 is negatively correlated with frequency modulation bandwidth BW of the linear frequency-modulated continuous waves, that is, the smaller frequency modulation bandwidth BW, the lower the ranging resolution.

Based on the above considerations, the first aspect of the present invention provides a method for extending a ranging scope.

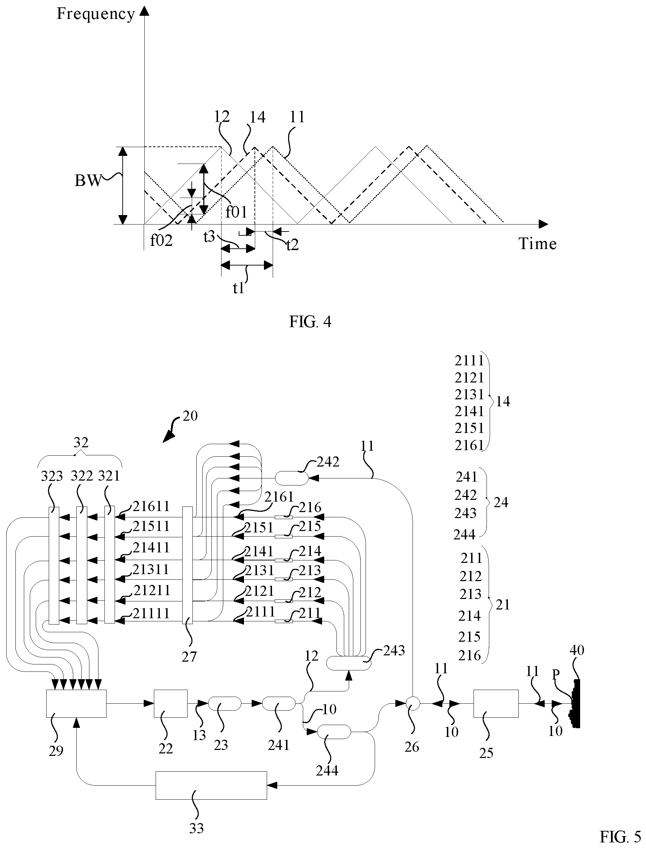

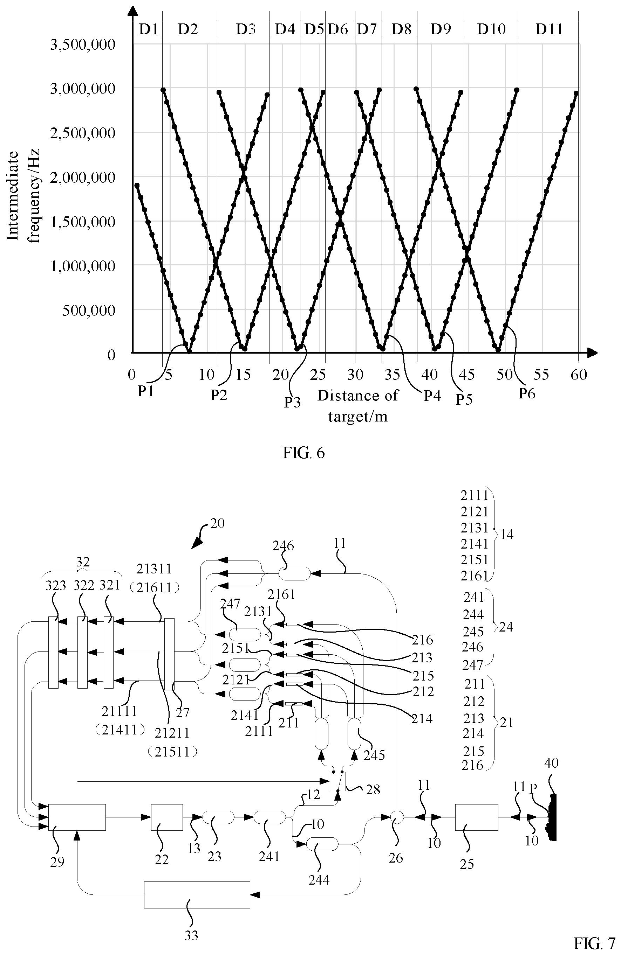

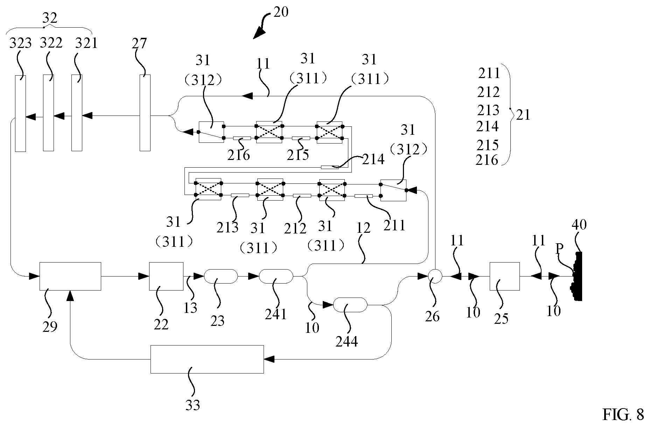

FIG. 3 is a flowchart showing a method for extending a ranging scope involved in an example of the present invention. FIG. 4 is a schematic diagram showing a principle of the method for extending the ranging scope involved in an example of the present invention. FIG. 5 is a schematic diagram showing a first embodiment of the ranging device involved in an example of the present invention. FIG. 6 is a schematic diagram showing a relation curve between an intermediate frequency of an interference signal formed by delayed reference light 14 and return light 11 and distance D of target 40 involved in an example of the present invention. FIG. 7 is a schematic diagram showing a second embodiment of ranging device 20 involved in an example of the present invention. FIG. 8 is a schematic diagram showing a third embodiment of ranging device 20 involved in an example of the present invention.

Referring to FIG. 3, in some examples, the method for extending the ranging scope may include: outputting measurement light 10 to target 40 and acquiring return light 11 formed by scattering of measurement light 10 by target 40 (step S10); inputting reference light 12 into delay network 21 of ranging device 20 such that delay network 21 outputs at least one path of delayed reference light 14 (step S20); obtaining at least one path of interference signals based on the at least one path of delayed reference light 14 and return light 11 (step S30); and obtaining distance D of target 40 based on the distance interval and the at least one path of interference signals (step S40).

In some examples, in step S10, measurement light 10 may be output to target 40 and return light 11 formed by scattering of measurement light 10 by target 40 may be acquired. In this case, it is convenient for return light 11 to subsequently interfere with reference light 12 (described later) to form an interference signal, and distance D of target 40 is obtained through the interference signal.

Referring to FIG. 5, in some examples, ranging device 20 may include generating module 22, and generating module 22 may output emitted light 13.

In some examples, ranging device 20 may include isolator 23. In this case, isolator 23 can reduce the circumstance of reflection of emitted light 13 to generating module 22, thereby protecting generating module 22.

In some examples, emitted light 13 may be linear frequency-modulated continuous light. In this case, the ranging precision can be improved by using the linear frequency-modulated continuous light to measure distance D of target 40.

In some examples, emitted light 13 may be triangular wave linear frequency-modulated continuous light. In some examples, emitted light 13 may be sawtooth linear frequency-modulated continuous waves.

In some examples, emitted light 13 may be split into measurement light 10 and reference light 12. Measurement light 10 may be output to target 40, and ranging device 20 may acquire return light 11 formed by scattering of measurement light 10 by target 40. Thus, return light 11 can interfere with reference light 12 to form an interference signal carrying information of distance D of target 40.

In some examples, measurement light 10 may be linear frequency-modulated continuous light. In some examples, measurement light 10 may be triangular wave linear frequency-modulated continuous light. In some examples, measurement light 10 may be sawtooth wave linear frequency-modulated continuous light.

In some examples, reference light 12 may be linear frequency-modulated continuous light. In some examples, reference light 12 may be triangular wave linear frequency-modulated continuous light. In some examples, reference light 12 may be sawtooth wave linear frequency-modulated continuous light.

In some examples, measurement light 10 and reference light 12 may be linear frequency-modulated continuous light. In this case, measurement light 10 and reference light 12 can have the same frequency characteristics, which can reduce the requirements for processing the interference signal, thereby being conducive to simplifying design.

In some examples, ranging device 20 may include a plurality of beam splitters 24. In this case, a beam of light can be split into a plurality of beams of light by arranging beam splitters 24 according to design needs.

In some examples, beam splitter 24 may be an optical component which splits a beam of incident light into two or more beams of light. In some examples, beam splitter 24 may not change a polarization state of the incident light. In this case, the consistency between measurement light 10 and reference light 12 can be maintained as much as possible.

In some examples, beam splitter 24 may also be used as a beam combiner. In other words, an input and an output of beam splitter 24 may be interchanged. In this case, a plurality of beams of light can be input into beam splitter 24 according to design needs, and beam splitter 24 can combine the plurality of beams of light and output a beam of light.

In the present invention, the beam splitter and the beam combiner may be collectively referred to as the beam splitter. In FIG. 5, FIG. 7 and FIG. 8, beam splitter 241, beam splitter 242, beam splitter 243, beam splitter 244, beam splitter 245 and beam splitter 246 are used as the beam splitters; and in FIG. 7, beam splitter 247 is used as the beam combiner.

In some examples, beam splitter 24 may be a polarization-maintaining beam splitter. In this case, beam splitter 24 can maintain a polarization state of the light beam.

In some examples, measurement light 10 and reference light 12 may be emitted by the same generating module 22. Thus, the consistency between measurement light 10 and reference light 12 can be better maintained.

In some examples, measurement light 10 and reference light 12 may be emitted by different generating modules 22. In this case, compared with a single generating module 22, there is no need to use beam splitter 241 to split emitted light 13 such that the loss of light intensity of emitted light 13 caused by beam splitter 241 can be reduced, then measurement light 10 can be output to a relatively distant target 40, and relatively strong return light 11 can be obtained, thereby enabling a signal of return light 11 to be easier to detect and distinguish, obtaining a relatively strong interference signal, and thus being conducive to improving the ranging accuracy and sensitivity.

In some examples, ranging device 20 may include lens module 25. Measurement light 10 may be transmitted to lens module 25, and lens module 25 may transmit measurement light 10 to target 40 and acquire return light 11 formed by scattering of measurement light 10 by target 40. In this case, lens module 25 can output measurement light 10 to the surface of target 40 in a better converging state, thereby being conducive to obtaining relatively strong return light 11, and meanwhile, lens module 25 can accurately obtain return light 11.

In some examples, ranging device 20 may include circulator 26. Circulator 26 may guide measurement light 10 to be transmitted to lens module 25 and simultaneously guide return light 11 to be transmitted to coupling module 27 (described later). In this case, a direction of the light beam can be conveniently and rapidly changed by using circulator 26, thereby simplifying the optical path design of ranging device 20.

In some examples, return light 11 may be split to form at least one path of return light.

In some examples, in step S20, reference light 12 may be input into delay network 21 of ranging device 20 such that delay network 21 outputs at least one path of delayed reference light 14 (referring to FIG. 4 and FIG. 5).

Referring to FIG. 5, in some examples, ranging device 20 may include delay network 21. In some examples, delay network 21 may include a plurality of preset delay parameters.

In some examples, reference light 12 may be input into delay network 21 of ranging device 20, and delay network 21 may output at least one path of delayed reference light 14. Delayed reference light 14 may have preset delay parameters matching reference light 12. In other words, compared with reference light 12, each path of delayed reference light 14 output by delay network 21 has a respective matched preset delay parameter.

In this case, referring to FIG. 4, reference light 12 is input into delay network 21 to obtain at least one path of delayed reference light 14 having preset and known preset delay parameters matching reference light 12. In other words, a function of delay network 21 is equivalent to maintaining a position of target 40 to be unchanged, and indirectly moving ranging device 20 toward a direction close to target 40 by a known distance.

It should be noted that in actual operation, ranging device 20 is not actually moved toward the direction close to target 40, but based on the known preset delay parameters, an actual flight time t1 of return light 11 relative to reference light 12 is indirectly shortened to flight time t2 of return light 11 relative to delayed reference light 14 by delay network 21, wherein shortened time t3 can be known based on the known preset delay parameters, thereby reducing a frequency difference between reference light 12 and return light 11, that is, compared with the interference signal formed by interference between reference light 12 and return light 11, the intermediate frequency of the interference signal formed by interference between delayed reference light 14 and return light 11 is correspondingly decreased (that is, intermediate frequency f01 shown in FIG. 4 is decreased to intermediate frequency f02). Thus, the sampling rate of the processing circuit of ranging device 20 and the complexity of related circuit design can be reduced, and meanwhile, relatively high ranging resolution can be achieved by setting relatively large frequency modulation bandwidth BW, thereby extending the ranging scope.

Referring to FIG. 5, in some examples, delay network 21 may include a plurality of delay paths. For example, delay network 21 may include two delay paths, three delay paths, four delay paths, five delay paths, six delay paths or more delay paths. For convenience of description, delay network 21 including six delay paths will be explained subsequently.

In some examples, the plurality of delay paths may be arranged in parallel. In this case, delay network 21 has a simple structure, thereby facilitating independent design of each delay path, and by arranging the delay paths in parallel, when a certain delay path fails, other delay paths are not affected, and maintenance is also facilitated.

Referring to FIG. 5, in some examples, the plurality of delay paths may include first delay path 211, second delay path 212, third delay path 213, fourth delay path 214, fifth delay path 215 and sixth delay path 216, and each delay path may be arranged in parallel, respectively.

In some examples, reference light 12 split by beam splitter 243 may be respectively transmitted to the delay paths to form delayed reference light 14. Specifically, reference light 12 may be split into six paths of reference light 12 by beam splitter 243, the six paths of reference light 12 may be respectively input into the six delay paths, and after passing through the six delay paths, six paths of delayed reference light 14 are respectively output.

For convenience of explanation, the six paths of delayed reference light 14 output by the six delay paths are respectively named, that is, first delay path 211 correspondingly outputs first delayed reference light 2111, second delay path 212 correspondingly outputs second delayed reference light 2121, third delay path 213 correspondingly outputs third delayed reference light 2131, fourth delay path 214 correspondingly outputs fourth delayed reference light 2141, fifth delay path 215 correspondingly outputs fifth delayed reference light 2151, and sixth delay path 216 correspondingly outputs sixth delayed reference light 2161.

In some examples, first delay path 211, second delay path 212, third delay path 213, fourth delay path 214, fifth delay path 215 and sixth delay path 216 may respectively have different preset delay parameters.

In some examples, the delay path of ranging device 20 may be a delay fiber. In some examples, the delay fiber may be a polarization-maintaining delay fiber. In this case, the delay fiber can delay propagation of reference light 12 and maintain a polarization state of reference light 12 simultaneously.

In some examples, the preset delay parameter may be represented by a length of the delay fiber. In other words, based on the known length of the delay fiber, a reduction amount of the actual flight time t1 of return light 11 (that is, time t3 shown in FIG. 4) may be determined.

In some examples, lengths of delay fibers used by first delay path 211, second delay path 212, third delay path 213, fourth delay path 214, fifth delay path 215 and sixth delay path 216 may be known, that is, each delay path may have a known delay distance (that is, the length of the delay fiber). In some examples, the delay distance may be used to represent the preset delay parameter.

In some examples, the delay distance of each delay path may be different, in other words, the preset delay parameter of each path of delayed reference light 14 may be different. Thus, different delay paths can be selected according to different ranging scopes.

For convenience of explanation, six delay distances correspondingly set for the six delay paths are respectively named, that is, first delay path 211 may have a first delay distance, second delay path 212 may have a second delay distance, third delay path 213 may have a third delay distance, fourth delay path 214 may have a fourth delay distance, fifth delay path 215 may have a fifth delay distance, and sixth delay path 216 may have a sixth delay distance.

In some examples, in step S30, at least one path of interference signals may be obtained based on the at least one path of delayed reference light 14 and return light 11.

Referring to FIG. 5, in some examples, ranging device 20 may include coupling module 27.

In some examples, the at least one path of delayed reference light 14 and return light 11 may be respectively transmitted to coupling module 27, and coupling module 27 may output at least one path of interference signals.

In some examples, coupling module 27 may be a frequency mixer. In some examples, coupling module 27 may be a beam combiner.

In some examples, return light 11 may be split into six paths of return light 11 by beam splitter 242, and the six paths of return light 11 may respectively interfere with first delayed reference light 2111, second delayed reference light 2121, third delayed reference light 2131, fourth delayed reference light 2141, fifth delayed reference light 2151 and sixth delayed reference light 2161 in coupling module 27 to respectively obtain first interference signal 21111, second interference signal 21211, third interference signal 21311, fourth interference signal 21411, fifth interference signal 21511 and sixth interference signal 21611.

In some examples, a relation among the intermediate frequency of the interference signal formed by interference between delayed reference light 14 and return light 11, distance D of target 40, and the delay distance of the delay path may be as shown in Formula 1:
$f = \frac{\left|2D-REF\times n\right|}{c} \times \frac{B W}{T}$
where f represents the intermediate frequency of the interference signal formed by interference between delayed reference light 14 and return light 11; D represents distance D of target 40, REF represents the delay distance of the delay path, c represents a light speed, n represents a refractive index of the delay path, BW represents frequency modulation bandwidth BW, and T represents frequency modulation period T.

In some examples, when the delay path is the delay fiber, n may represent a refractive index of the delay fiber.

In some examples, a relation curve between the intermediate frequency and distance D of target 40 (hereinafter referred to as a relation curve) may be obtained based on Formula 1. Taking the relation curve between the intermediate frequency and distance D of target 40 shown in FIG. 6 as an example, the relation curve may be obtained by setting the following parameters, that is, the first delay distance REF1 is 10 meters, the second delay distance REF2 is 20 meters, the third delay distance REF3 is 30 meters, the fourth delay distance REF4 is 45 meters, the fifth delay distance REF5 is 55 meters, the sixth delay distance REF6 is 66 meters, the light speed c is 3×10⁸ meters/second, BW/T is 82.7 THz/s, and n is 1.48.

Referring to FIG. 6, in some examples, a relation curve between the intermediate frequency f1 of first interference signal 21111 and distance D of target 40 may be set as first curve P1, a relation curve between intermediate frequency f2 of second interference signal 21211 and distance D of target 40 may be set as second curve P2, a relation curve between intermediate frequency f3 of third interference signal 21311 and distance D of target 40 may be set as a third curve P3, a relation curve between intermediate frequency f4 of fourth interference signal 21411 and distance D of target 40 may be set as fourth curve P4, a relation curve between intermediate frequency f5 of fifth interference signal 21511 and distance D of target 40 may be set as fifth curve P5, and a relation curve between intermediate frequency f6 of sixth interference signal 21611 and distance D of target 40 may be set as sixth curve P6.

In some examples, the preset delay parameter of one range (described later) may be set in various manners, and M represents a length of distance D involved between the intermediate frequency of any interference signal being 0 and a low-pass cutoff frequency of a filter 322 (described later). For example, if one range includes two delay paths, a scope of distance D involved in first interference signal 21111 may be represented as (REF1×n/2-M, REF1×n/2+M), and at this time, REF1×n/2 may be not greater than M; and a scope of distance D involved in second interference signal 21211 may be represented as (REF2×n/2-M, REF2×n/2+M), and REF2×n/2-M may be equal to REF1×n/2. If one range includes three delay paths, the scope of distance D involved in first interference signal 21111 may be represented as (REF1×n/2-M, REF1×n/2+M), and at this time, REF1×n/2 may be not greater than M; the scope of distance D involved in second interference signal 21211 may be represented as (REF2×n/2-M, REF2×n/2+M), and REF2×n/2-M may be not greater than REF1×n/2; and a scope of distance D involved in third interference signal 21311 may be represented as (REF3×n/2-M, REF3×n/2+M), and REF3×n/2-M may be not less than REF1×n/2.

It should be noted that the setting manner of the preset delay parameter is not unique. In some examples, the preset delay parameter may be configured such that at least one of the relation curves corresponding to the distance intervals has a monotonic interval, and combinations of types of interference signals involved in different distance intervals may be different, thereby facilitating division of the distance intervals and simplifying a calculation process of a measurement distance (described later).

In the present invention, the "combinations of types of interference signals" may also be referred to as "composition of interference signals", and specifically may refer to that when measuring distance D of target 40, the obtained interference signals only include interference signals generated by matching the delay path of the distance interval where distance D of target 40 is positioned. For example, referring to FIG. 6, when the distance interval where distance D of target 40 is positioned is distance interval D2, the "combinations of types of interference signals" or "composition of interference signals" may only include first interference signal 21111 and second interference signal 21211; and when the distance interval where distance D of target 40 is positioned is a distance interval D3, the "combinations of types of interference signals" or "composition of interference signals" may only include first interference signal 21111, second interference signal 21211 and third interference signal 21311.

Referring to FIG. 6, in some examples, delay network 21 may be used to divide the ranging scope of ranging device 20 into a plurality of distance intervals.

In some examples, at least one path of interference signals may match the distance interval where target 40 is positioned. In other words, the distance interval where distance D of target 40 is positioned may be known through the obtained interference signal. For example, the ranging scope (that is, 60 meters) in FIG. 6 may be divided into 11 distance intervals (that is, a distance interval D1 to a distance interval D11 shown in FIG. 6). In this case, the ranging scope can be divided into a plurality of distance intervals by judging whether return light 11 interferes with at least one path of delayed reference light 14 to generate an interference signal. Thus, when measuring distance D of target 40, the distance interval where distance D of target 40 is positioned can be known, thereby facilitating selection of the matched interference signal to calculate distance D of target 40.

In some examples, the relation curves may overlap each other. In other words, adjacent relation curves may cover the same measurement distance D. Thus, the entire ranging scope can be completely covered, that is, for any measurement distance D within the ranging scope, a corresponding intermediate frequency can be obtained to facilitate calculation of distance D of target 40.

In some examples, in the distance interval, the corresponding relation curve may have a monotonic interval. In other words, in each distance interval, as distance D of target 40 varies, the intermediate frequency of the corresponding interference signal may monotonically increase or monotonically decrease (referring to FIG. 6). In this case, the calculation process of measurement distance D can be simplified; and if in the distance interval, as distance D of target 40 varies, the corresponding intermediate frequency includes an increasing interval and a decreasing interval (for example, second curve P2 corresponding to distance interval D2 in FIG. 6) simultaneously, the calculation of measurement distance D by using the relation curve will increase the calculation complexity (it is necessary to judge whether distance D of target 40 corresponds to an increasing section or a decreasing section of the relation curve), and the intermediate frequency corresponding to the relation curve is relatively low, thereby being not conducive to obtaining a relatively accurate measurement distance D.

In some examples, at least adjacent relation curves may cover the same measurement distance D and have the same monotonic interval. For example, in distance interval D2 in FIG. 6, first curve P1 and second curve P2 overlap and cover part of the same measurement distance D, and have the decreasing section simultaneously. In this case, the division of the distance intervals can be facilitated such that the relation curve corresponding to each distance interval has a monotonically increasing or monotonically decreasing interval, thereby simplifying the calculation process of measurement distance D and improving the ranging accuracy.

In some examples, the distance intervals may be divided based on the low-pass cutoff frequency for filtering the interference signal. Specifically, in the relation curve, the distance intervals may be divided with measurement distance D corresponding to the low-pass cutoff frequency as a boundary. Taking FIG. 6 as an example, the low-pass cutoff frequency is 3×10⁶ Hz, and in each relation curve, measurement distance D corresponding to the frequency of 3×10⁶ may be selected as the boundary of each distance interval. In this case, it is conducive to enabling the composition of the interference signal corresponding to each distance interval to be unique, thereby facilitating judgment of the distance interval where distance D of target 40 is positioned.

In some examples, the low-pass cutoff frequency may be determined by filter 322 of ranging device 20 (described later). In this case, a relatively appropriate intermediate frequency can be acquired to calculate distance D of target 40.

In some examples, the method for extending the ranging scope may include obtaining a combined code for representing whether delayed reference light 14 output by delay network 21 interferes with return light 11 based on the at least one path of interferencesignals. In this case, when measuring distance D of target 40, the form of the combined code facilitates implementation of the method for extending the ranging scope through digital processing.

In some examples, a 6-bit combined code may be formed based on first interference signal 21111, second interference signal 21211, third interference signal 21311, fourth interference signal 21411, fifth interference signal 21511 and sixth interference signal 21611. Taking first interference signal 21111 as an example, when measuring distance D of target 40, when first interference signal 21111 is detected to be present, a code corresponding to first interference signal 21111 in the combined code is set to be 1; otherwise, the code corresponding to first interference signal 21111 is set to be 0.

In some examples, the code corresponding to first interference signal 21111 may be set as a first code, a code corresponding to second interference signal 21211 may be set as a second code, a code corresponding to third interference signal 21311 may be set as a third code, a code corresponding to fourth interference signal 21411 may be set as a fourth code, a code corresponding to fifth interference signal 21511 may be set as a fifth code, and a code corresponding to sixth interference signal 21611 may be set as a sixth code.

In some examples, the first code, the second code, the third code, the fourth code, the fifth code and the sixth code may be sequentially sorted to form the combined code. For example, when the first code is 1, the second code is 0, the third code is 0, the fourth code is 0, the fifth code is 0, and the sixth code is 0, the combined code may be 100000.

In some examples, the method for extending the ranging scope may include obtaining the distance interval where target 40 is positioned based on the combined code. In this case, when measuring distance D of target 40, ranging device 20 can determine the distance interval where distance D of target 40 is positioned by acquiring the combined code.

Referring to FIG. 6, in some examples, when the combined code is 100000, distance D of target 40 may be positioned in distance interval D1.

In some examples, when the combined code is 110000, distance D of target 40 may be positioned in distance interval D2.

In some examples, when the combined code is 111000, distance D of target 40 may be positioned in distance interval D3.

In some examples, when the combined code is 011000, distance D of target 40 may be positioned in distance interval D4.

In some examples, when the combined code is 011100, distance D of target 40 may be positioned in distance interval D5.

In some examples, when the combined code is 001100, distance D of target 40 may be positioned in distance interval D6.

In some examples, when the combined code is 001110, distance D of target 40 may be positioned in distance interval D7.

In some examples, when the combined code is 000110, distance D of target 40 may be positioned in distance interval D8.

In some examples, when the combined code is 000111, distance D of target 40 may be positioned in distance interval D9.

In some examples, when the combined code is 000011, distance D of target 40 may be positioned in distance interval D10.

In some examples, when the combined code is 000001, distance D of target 40 may be positioned in distance interval D11.

In some examples, the plurality of distance intervals may match the plurality of preset delay parameters. For example, in distance interval D2 in FIG. 6, distance interval D2 may correspond to first interference signal 21111 and second interference signal 21211, first interference signal 21111 may correspond to first delayed reference light 2111, second interference signal 21211 may correspond to second delayed reference light 2121, and distance interval D2 may match the preset delay parameters respectively corresponding to first delayed reference light 2111 and second delayed reference light 2121.

In some examples, each delay path has the preset delay parameter in one-to-one correspondence with each distance interval. In this case, delayed reference light 14 with an appropriate preset delay parameter can interfere with return light 11 according to different distances D of target 40. For example, when distance D of target 40 is relatively small, delayed reference light 14 with a relatively small preset delay parameter (that is, the time t3 in FIG. 4 is relatively small) can interfere with return light 11; and when distance D of target 40 is relatively large, delayed reference light 14 with a relatively large preset delay parameter (that is, the time t3 in FIG. 4 is relatively large) can interfere with return light 11, thereby being conducive to breaking through the limitations of the intermediate frequency of the interference signal, frequency modulation bandwidth BW and frequency modulation period T on the ranging scope, and thus extending the ranging scope of ranging device 20. Moreover, since the ranging scope is divided into a plurality of small distance intervals, the ranging resolution can be advantageously improved by increasing frequency modulation bandwidth BW in each distance interval.

In some examples, the method for extending the ranging scope may include: dividing the plurality of delay paths into at least two types of range paths based on the plurality of distance intervals, and the range paths may match at least one of the distance intervals. Taking FIG. 6 as an example, distance intervals D1 to D6 may be divided into a first range, and corresponding first delay path 211, second delay path 212 and third delay path 213 may be divided into a first range path; and distance interval D7 to distance interval D11 may be divided into a second range, and corresponding fourth delay path 214, fifth delay path 215 and sixth delay path 216 may be divided into a second range path.

In this case, when measuring distance D of target 40, firstly the range where distance D of target 40 is positioned and the corresponding range path can be preliminarily judged based on the interference signal, and the delay path to be used can be determined based on the range where distance D of target 40 is positioned, thereby reducing the workload of interference signal detection and thus improving the ranging efficiency. For example, when it is detected that distance D of target 40 is positioned in the first range based on the interference signal, subsequently it is only necessary to judge the distance interval where distance D of target 40 is positioned based on first interference signal 21111, second interference signal 21211 and third interference signal 21311.

In some examples, the method for extending the ranging scope may include obtaining the range path matching the distance interval where target 40 is positioned based on the at least one path of interference signals. In this case, when measuring distance D of target 40, the range where distance D of target 40 is positioned and the corresponding range path can be preliminarily judged based on the interference signal.

In some examples, the method for extending the ranging scope may include obtaining a combined code matching the range path based on the at least one path of interference signals and the range path. In this case, the number of bits of the combined code can be reduced. Taking FIG. 6 as an example, when it is judged that distance D of target 40 is in the first range, it is only necessary to form the combined code by using the first range path corresponding to the first range, thereby changing the combined code from the previous 6 bits to 3 bits, and thus reducing the calculation amount and increasing the ranging speed.

In some examples, the method for extending the ranging scope may include obtaining the distance interval where target 40 is positioned based on the combined code matching the range path. Thus, the matched interference signal can be selected based on the distance interval where distance D of target 40 is positioned to calculate distance D of target 40.

In some examples, within the same range, at least adjacent relation curves may cover the same measurement distance D and have the same monotonic interval.

In some examples, the relation curves respectively belonging to different ranges at the junction of two adjacent ranges may overlap. Thus, the two adjacent ranges can completely cover distance D of target 40.

Referring to FIG. 7, in some examples, ranging device 20 may include range optical switch 28 for dividing the plurality of delay paths into at least two types of range paths based on the plurality of distance intervals.

In some examples, range optical switch 28 may include an input end and a plurality of output ends corresponding to different range paths. In this case, the input end of range optical switch 28 can only be connected to one output end simultaneously, thereby dividing the plurality of delay paths into range paths belonging to different ranges.

In some examples, the output ends of range optical switch 28 may be connected to the matched delay paths, and reference light 12 may be input into delay network 21 via range optical switch 28. In this case, when measuring distance D of target 40, range optical switch 28 can be controlled to obtain the delay path of the corresponding range, thereby reducing the workload of interference signal detection, and thus improving the ranging efficiency.

In some examples, range optical switch 28 may have one input end and two output ends (that is, a 1×2 range optical switch), and the two output ends may be respectively connected to two range paths through two beam splitters 245. In this case, by using the 1×2 range optical switch, the ranging scope can be divided into two ranges with two corresponding range paths.

Referring to FIG. 5 and FIG. 7, in some examples, ranging device 20 may include processing module 29.

In some examples, if processing module 29 does not receive the at least one path of interference signals, range optical switch 28 may be controlled to switch the range paths. In this case, when measuring distance D of target 40, if processing module 29 does not receive the interference signals, it is judged that distance D of target 40 is not within the range defined by the delay path connected to the output end of current range optical switch 28, and processing module 29 can switch range optical switch 28 to another range path, thereby achieving switching between different range paths.

In some examples, if processing module 29 still detects no interference signal after range optical switch 28 is switched to connect all the range paths, it is judged that distance D of target 40 exceeds the ranging scope of ranging device 20. In this case, a distance between target 40 and ranging device 20 needs to be shortened such that target 40 is positioned within the ranging scope.

Referring to FIG. 8, in some examples, the plurality of delay paths may be arranged in series. In this case, the number of components of ranging device 20 can be reduced, thereby being conducive to achieving the portability and miniaturization of ranging device 20.

Referring to FIG. 8, in some examples, ranging device 20 may include delay network optical switch 31. In some examples, delay network optical switch 31 may include a multi-input multi-output optical switch. Taking a dual-input dual-output optical switch 311 shown in FIG. 8 as an example, the possible connection logic includes: connecting a first input end to a first output end, and connecting a second input end to a second output end; or connecting the first input end to the second output end, and connecting the second input end to the first output end.

In some examples, delay network optical switch 31 may include single-input multi-output optical switch 312.

Referring to FIG. 8, in some examples, the delay paths may be arranged in series through a plurality of dual-input dual-output optical switches 311 and a plurality of single-input dual-output optical switches 312. In this case, by switching the plurality of dual-input dual-output optical switches 311 and the plurality of single-input dual-output optical switches 312, a plurality of types of delay paths meeting design requirements can be formed, and corresponding interference signals can be obtained.

In the present invention, single-input dual-output optical switches 312 may also be used as dual-input single-output optical switches.

Referring to FIG. 8, in some examples, when measuring distance D of target 40, firstly first delay path 211 is connected and first interference signal 21111 is obtained; then first delay path 211 is disconnected and second delay path 212 is connected and second interference signal 21211 is obtained; and by sequentially controlling delay network optical switch 31, third interference signal 21311, fourth interference signal 21411, fifth interference signal 21511 and sixth interference signal 21611 are obtained, thereby obtaining a relation diagram of the interference signals and distance D of target 40 as shown in FIG. 6.

In some examples, the switching logic of delay network optical switch 31 may be adaptively designed to adjust the preset delay parameters of the delay paths. For example, by setting the switching logic of delay network optical switch 31, first delay path 211 and second delay path 212 may be combined to form a new delay path and obtain a new interference signal. In this case, the preset delay parameters of delay network 21 can be flexibly adjusted, thereby improving the ranging flexibility and adjusting the preset delay parameters of delay network 21 according to the needs of the ranging scope in a timely manner.

In some examples, processing module 29 may control the switching logic of delay network optical switch 31.

In some examples, in step S40, distance D of target 40 may be obtained based on the distance interval and the at least one path of interference signals.

In some examples, the method for extending the ranging scope may include obtaining the preset delay parameter matching a preset condition based on the distance interval as a target delay parameter, and the preset condition may be that the interference signal is not less than a preset threshold. In this case, when the distance interval where distance D of target 40 is positioned is determined, the interference signal meeting the preset condition can be selected to calculate distance D of target 40, thereby improving the ranging accuracy.

In some examples, the target delay parameter may be the preset delay parameter of the delay path corresponding to the interference signal meeting the preset condition.

In some examples, one or more target delay parameters may be included. For example, in distance interval D1 in FIG. 6, the target delay parameters may include only the preset delay parameters of first delay path 211 corresponding to first interference signal 21111; and in distance interval D3, the target delay parameters may include the preset delay parameters of first delay path 211 corresponding to first interference signal 21111 and the preset delay parameters of third delay path 213 corresponding to third interference signal 21311.

In some examples, the target delay parameter may be a length of a delay fiber, that is, a delay distance. For example, the target delay parameter may be at least one of a first delay distance to a sixth delay distance.

In some examples, the preset condition may include that light intensity of the interference signal is not less than a preset threshold. In this case, since the light intensity of reference light 12 and return light 11 is attenuated after passing through a plurality of optical components in ranging device 20, calculating distance D of target 40 by selecting an interference signal with higher light intensity can improve the ranging accuracy.

In some examples, the preset condition may include that the intermediate frequency of the interference signal is not less than a preset threshold. In this case, the interference signal with a lower intermediate frequency is more susceptible to noise, thereby reducing a signal-to-noise ratio. For example, when distance D of target 40 is relatively close to the first delay distance, distance D of target 40 may be positioned in distance interval D2, and first interference signal 21111 formed by return light 11 and first delayed reference light 2111 and second interference signal 21211 formed by return light 11 and second delayed reference light 2121 can be detected to be present. At this time, since second interference signal 21211 has a higher intermediate frequency and a higher signal-to-noise ratio, the second delay distance may be selected as the target delay parameter according to the preset condition (that is, when distance D of target 40 is positioned in distance interval D2, distance D of target 40 may be calculated based on the second delay distance and second interference signal 21211, referring to Formula 3 described later). Thus, calculating distance D of target 40 by selecting the interference signal with the higher intermediate frequency can improve the ranging resolution and accuracy.

In some examples, the preset condition may include that an amplitude value of the interference signal is not less than a preset threshold. In this case, a smaller amplitude value may result in failure to detect the interference signal, especially in an environment with higher background noise. By setting the preset condition and selecting the interference signal with a larger amplitude value to calculate distance D of target 40, the accuracy, precision and sensitivity of ranging can be improved.

In some examples, the method for extending the ranging scope may include obtaining distance D of target 40 based on the target delay parameter, the at least one path of interference signals, and system parameters of measurement light 10.

In some examples, the system parameters of measurement light 10 may include frequency modulation bandwidth BW and frequency modulation period T.

For convenience of explanation, in the formulas involved in the present invention, the formula parameters used to calculate distance D of target 40 may include that,
D represents distance D of target 40;
REF1 represents the first delay distance; REF2 represents the second delay distance; REF3 represents the third delay distance; REF4 represents the fourth delay distance; REF5 represents the fifth delay distance; REF6 represents the sixth delay distance;
f1 represents the intermediate frequency of first interference signal 21111; f2 represents the intermediate frequency of second interference signal 21211; f3 represents the intermediate frequency of third interference signal 21311; f4 represents the intermediate frequency of fourth interference signal 21411; f5 represents the intermediate frequency of fifth interference signal 21511; f6 represents the intermediate frequency of sixth interference signal 21611;
c represents the light speed, having a specific numerical value which may be 3×10⁸ m/s;
n represents a refractive index of the delay path, in some examples, n may be a refractive index of the delay fiber of the delay path; and
a represents a ratio of frequency modulation bandwidth BW to frequency modulation period T of the linear frequency modulation continuous waves, that is, a = BW/T (referring to FIG. 1), and a may also be referred to as a gradient of the frequency function of the linear frequency modulation continuous waves.

Referring to FIG. 6, in some examples, when distance D of target 40 is positioned in distance interval D1, distance D of target 40 may be obtained based on first interference signal 21111 (that is, first curve P1). In some examples, distance D of target 40 may be calculated by Formula 2:
$D = 0.5 \times \left(REF1\times n-f1\times c/a\right)$

In some examples, when distance D of target 40 is positioned in distance interval D2, distance D of target 40 may be obtained based on second interference signal 21211 (that is, second curve P2). In some examples, distance D of target 40 may be calculated by Formula 3:
$D = 0.5 \times \left(REF2\times n-f2\times c/a\right)$

In some examples, when distance D of target 40 is positioned in distance interval D3, distance D of target 40 may be obtained based on third interference signal 21311 (that is, the third curve P3). In some examples, distance D of target 40 may be calculated by Formula 4:
$D = 0.5 \times \left(REF3\times n-f3\times c/a\right)$

In some examples, when distance D of target 40 is positioned in distance interval D3, distance D of target 40 may be obtained based on first interference signal 21111. In some examples, distance D of target 40 may be calculated by Formula 5:
$D = 0.5 \times \left(REF1\times n+f1\times c/a\right)$

In some examples, when distance D of target 40 is positioned in distance interval D4, distance D of target 40 may be obtained based on second interference signal 21211. In some examples, distance D of target 40 may be calculated by Formula 6:
$D = 0.5 \times \left(REF2\times n+f2\times c/a\right)$

In some examples, when distance D of target 40 is positioned in distance interval D5, distance D of target 40 may be obtained based on second interference signal 21211. In some examples, distance D of target 40 may be calculated by Formula 7:
$D = 0.5 \times \left(REF2\times n+f2\times c/a\right)$

In some examples, when distance D of target 40 is positioned in distance interval D5, distance D of target 40 may be obtained based on fourth interference signal 21411 (that is, the fourth curve P4). In some examples, distance D of target 40 may be calculated by Formula 8:
$D = 0.5 \times \left(REF4\times n-f4\times c/a\right)$

In some examples, when distance D of target 40 is positioned in distance interval D6, distance D of target 40 may be obtained based on third interference signal 21311. In some examples, distance D of target 40 may be calculated by Formula 9:
$D = 0.5 \times \left(REF3\times n+f3\times c/a\right)$

In some examples, when distance D of target 40 is positioned in distance interval D6, distance D of target 40 may be obtained based on fourth interference signal 21411. In some examples, distance D of target 40 may be calculated by Formula 10:
$D = 0.5 \times \left(REF4\times n-f4\times c/a\right)$

In some examples, when distance D of target 40 is positioned in distance interval D7, distance D of target 40 may be obtained based on third interference signal 21311. In some examples, distance D of target 40 may be calculated by Formula 11:
$D = 0.5 \times \left(REF3\times n+f3\times c/a\right)$

In some examples, when distance D of target 40 is positioned in distance interval D7, distance D of target 40 may be obtained based on fifth interference signal 21511 (that is, the fifth curve P5). In some examples, distance D of target 40 may be calculated by Formula 12:
$D = 0.5 \times \left(REF5\times n-f5\times c/a\right)$

In some examples, when distance D of target 40 is positioned in distance interval D8, distance D of target 40 may be obtained based on fifth interference signal 21511. In some examples, distance D of target 40 may be calculated by Formula 13:
$D = 0.5 \times \left(REF5\times n-f5\times c/a\right)$

In some examples, when distance D of target 40 is positioned in distance interval D9, distance D of target 40 may be obtained based on fourth interference signal 21411. In some examples, distance D of target 40 may be calculated by Formula 14:
$D = 0.5 \times \left(REF4\times n+f4\times c/a\right)$

In some examples, when distance D of target 40 is positioned in distance interval D9, distance D of target 40 may be obtained based on sixth interference signal 21611 (that is, the sixth curve P6). In some examples, distance D of target 40 may be calculated by Formula 15:
$D = 0.5 \times \left(REF6\times n-f6\times c/a\right)$

In some examples, when distance D of target 40 is positioned in distance interval D10, distance D of target 40 may be obtained based on fifth interference signal 21511. In some examples, distance D of target 40 may be calculated by Formula 16:
$D = 0.5 \times \left(REF5\times n+f5\times c/a\right)$

In some examples, when distance D of target 40 is positioned in distance interval D11, distance D of target 40 may be obtained based on sixth interference signal 21611. In some examples, distance D of target 40 may be calculated by Formula 17:
$D = 0.5 \times \left(REF6\times n+f6\times c/a\right)$

In some examples, ranging device 20 may include a detection module 32. The detection module 32 may receive at least one path of interference signals output by coupling module 27 and convert the at least one path of interference signals into electrical signals.

In some examples, detection module 32 may include photodetector 321. In this case, photodetector 321 can convert optical signals into electrical signals.

In some examples, detection module 32 may include filter 322. In some examples, filter 322 may be a low-pass filter. In this case, filter 322 can filter out a high frequency of the interference signal, thereby being conducive to simplifying the design of the processing circuit in ranging device 20 and removing highfrequency noise.

In some examples, detection module 32 may include analog-to-digital converter 323. In this case, the interference signal in an analog form can be converted into a signal in a digital form to facilitate digital processing.

In some examples, at least one path of interference signals may be output to processing module 29 of ranging device 20, and processing module 29 may obtain distance D of target 40 based on the distance interval and the at least one path of interference signals.

In some examples, ranging device 20 may include correction module 33. In this case, a linear state of light waves emitted by generating module 22 can be monitored and fed back to processing module 29, so as to compensate or correct the nonlinearity of the emitted light waves.

In some examples, correction module 33 may be a Mach-Zehnder interferometer. In this case, operating conditions of the Mach-Zehnder interferometer can be changed by adjusting a relative path length or introducing a phase shift. This adjustability enables the Mach-Zehnder interferometer to adapt to different correction demands and have certain flexibility.

In some examples, measurement light 10 may be split into two beams of measurement light 10 by beam splitter 244, one beam of measurement light 10 may be output to target 40, and the other beam of measurement light 10 may be input into correction module 33.

In some examples, various optical elements of ranging device 20 may be connected through fibers. In some examples, the various optical elements of ranging device 20 may be connected through polarization-maintaining single-mode fibers.

A first aspect of the present invention provides a method for extending a ranging scope, being a method for measuring distance D of target 40 by utilizing ranging device 20. Ranging device 20 may include delay network 21 used to divide the ranging scope into a plurality of distance intervals, delay network 21may include a plurality of preset delay parameters matching the plurality of distance intervals, and the method for extending the ranging scope may include: outputting measurement light 10 to target 40 and acquiring return light 11 formed by scattering of measurement light 10 by target 40; inputting reference light 12 into delay network 21 such that delay network 21 outputs at least one path of delayed reference light 14, delayed reference light 14 having preset delay parameters matching reference light 12; obtaining at least one path of interference signals based on the at least one path of delayed reference light 14 and return light 11, the at least one path of interference signals matching the distance interval where target 40 is positioned; and obtaining distance D of target 40 based on the distance interval and the at least one path of interference signals.

In this case, measurement light 10 is output to target 40 and return light 11 is acquired, reference light 12 is input into delay network 21 to obtain the at least one path of delayed reference light 14, and compared with reference light 12 before being input into delay network 21, delayed reference light 14 has preset and known preset delay parameters matching reference light 12. In other words, a function of delay network 21 is equivalent to maintaining a position of target 40 to be unchanged, and indirectly moving ranging device 20 toward a direction close to target 40 by a known distance, thereby reducing a frequency difference between reference light 12 and return light 11, that is, compared with the interference signal formed by interference between reference light 12 and return light 11, the intermediate frequency of the interference signal formed by interference between delayed reference light 14 and return light 11 is correspondingly reduced.

In addition, in the method for extending the ranging scope, the ranging scope can be divided into a plurality of distance intervals by judging whether return light 11 interferes with the at least one path of delayed reference light 14 to generate the interference signal. Thus, when measuring distance D of target 40, the distance interval where distance D of target 40 is positioned can be known, thereby facilitating selection of the matched interference signal to calculate distance D of target 40.

Thus, through the method for extending the ranging scope provided by the first aspect of the present invention, a sampling rate of the processing circuit of ranging device 20 and the complexity of related circuit design can be reduced, thereby being conducive to breaking through the limitations of the intermediate frequency of the interference signal, frequency modulation bandwidth BW and frequency modulation period T on the ranging scope, and further extending the ranging scope of ranging device 20. Moreover, since the ranging scope is divided into a plurality of small distance intervals, the ranging resolution can be advantageously improved by increasing frequency modulation bandwidth BW in each distance interval.

A second aspect of the present invention provides a device 20 for extending a ranging scope of frequency-modulated continuous waves, being a device used to measure distance D of target 40. The device may include: a generating module 22, a delay network 21 used to divide a ranging scope of ranging device 20 into a plurality of distance intervals, a coupling module 27, and a processing module 29, wherein delay network 21 includes a plurality of preset delay parameters matching the plurality of distance intervals; light waves emitted by generating module 22 include measurement light 10 and reference light 12, measurement light 10 is output to target 40, and ranging device 20 acquires return light 11 formed by scattering of measurement light 10 by target 40; reference light 12 is input into delay network 21, and delay network 21 outputs at least one path of delayed reference light 14, delayed reference light 14 having preset delay parameters matching reference light 12; the at least one path of delayed reference light 14 and return light 11 are respectively transmitted to coupling module 27, coupling module 27 outputs at least one path of interference signals to processing module 29, and the at least one path of interference signals matches the distance interval where target 40 is positioned; and processing module 29 obtains distance D of target 40 based on the distance interval and the at least one path of interference signals.

In this case, by providing delay network 21 and dividing the ranging scope into a plurality of distance intervals based on the interference signal, the device in the second aspect of the present invention can reduce a sampling rate of the processing circuit and the complexity of related circuit design, thereby being conducive to breaking through the limitations of the intermediate frequency of the interference signal, frequency modulation bandwidth BW and frequency modulation period T on the ranging scope, and further extending the ranging scope of ranging device 20. Moreover, since the ranging scope is divided into a plurality of small distance intervals, the ranging resolution can be advantageously improved by increasing frequency modulation bandwidth BW in each distance interval.

Although the present invention has been specifically explained with reference to the accompanying drawings and examples, it should be understood that the above explanation does not limit the present invention in any form. Those skilled in the art may make modifications and variations to the present invention according to needs without departing from the essential spirit and scope of the present invention, and such modifications and variations fall within the scope of the present invention.

## Claims

1. A method for extending a ranging scope of frequency-modulated continuous waves, being a method for measuring a distance of a target by utilizing a ranging device, **characterized in that** the ranging device comprises a delay network used to divide a ranging scope of the ranging device into a plurality of distance intervals, the delay network comprises a plurality of preset delay parameters matching the plurality of distance intervals, and the method for extending the ranging scope of frequency-modulated continuous waves comprises: outputting measurement light to the target and acquiring return light formed by scattering of the measurement light by the target; inputting reference light into the delay network such that the delay network outputs at least one path of delayed reference light, the delayed reference light having preset delay parameters matching the reference light; obtaining at least one path of interference signals based on the at least one path of delayed reference light and the return light, the at least one path of interference signals matching the distance interval where the target is positioned; and obtaining the distance of the target based on the distance interval and the at least one path of interference signals.

2. The method for extending a ranging scope of frequency-modulated continuous waves according to claim 1, **characterized in that** the delay network comprises a plurality of delay paths, and each of the plurality of delay paths has the preset delay parameter in one-to-one correspondence with each of the plurality of distance intervals.

3. The method for extending a ranging scope of frequency-modulated continuous waves according to claim 1, **characterized by** comprising: obtaining a combined code for representing whether the delayed reference light output by the delay network interferes with the return light based on the at least one path of interference signals, and obtaining the distance interval where the target is positioned based on the combined code.

4. The method for extending a ranging scope of frequency-modulated continuous waves according to any one of claim 1 to claim 3, **characterized in that** the delay network comprises a plurality of delay paths, and the method for extending a ranging scope of frequency-modulated continuous waves comprises: dividing the plurality of delay paths into at least two types of range paths based on the plurality of distance intervals, the range paths matching at least one of the distance intervals; obtaining the range path matching the distance interval where the target is positioned based on the at least one path of interference signals; obtaining a combined code matching the range path based on the at least one path of interference signals and the range path; and obtaining the distance interval where the target is positioned based on the combined code matching the range path.

5. The method for extending a ranging scope of frequency-modulated continuous waves according to claim 1, **characterized by** comprising: obtaining the preset delay parameter matching a preset condition based on the distance interval as a target delay parameter, the preset condition being that the interference signal is not less than a preset threshold; and obtaining the distance of the target based on the target delay parameter, the at least one path of interference signals, and system parameters of the measurement light.

6. The method for extending a ranging scope of frequency-modulated continuous waves according to claim 1, **characterized in that** the preset delay parameters are configured such that at least one of relation curves corresponding to the distance intervals has a monotonic interval, and combinations of types of the interference signals involved in different distance intervals are different.

7. A device for extending a ranging scope of frequency-modulated continuous waves, being a device used to measure a distance of a target, **characterized by** comprising: a generating module, a delay network used to divide a ranging scope of the device into a plurality of distance intervals, a coupling module, and a processing module, wherein the delay network comprises a plurality of preset delay parameters matching the plurality of distance intervals; light waves emitted by the generating module comprise measurement light and reference light, the measurement light is output to the target, and the device acquires return light formed by scattering of the measurement light by the target; the reference light is input into the delay network, and the delay network outputs at least one path of delayed reference light, the delayed reference light having preset delay parameters matching the reference light; the at least one path of delayed reference light and the return light are respectively transmitted to the coupling module, the coupling module outputs at least one path of interference signals to the processing module, and the at least one path of interference signals matches the distance interval where the target is positioned; and the processing module obtains the distance of the target based on the distance interval and the at least one path of interference signals.

8. The device according to claim 7, **characterized in that**,
the delay network comprises a plurality of delay paths, the device comprises a range optical switch for dividing the plurality of delay paths into at least two types of range paths based on the plurality of distance intervals, the range optical switch comprises an input end and a plurality of output ends corresponding to different range paths, the output ends of the range optical switch are connected to the matched delay paths, and the reference light is input into the delay network via the range optical switch.

9. The device according to claim 8, **characterized in that**,
if the processing module does not receive the at least one path of interference signals, the range optical switch is controlled to switch the range paths.

10. The device according to claim 7, **characterized in that**,
the delay network comprises a plurality of delay paths, and the plurality of delay paths are arranged in parallel or in series.
